## Europäisches Patentamt

## European Patent Office

## Office européen des brevets

(19)

(11) Veröffentlichungsnummer: **0 002 178**
**B1**

(12) **EUROPÄISCHE PATENTSCHRIFT**

(45) Veröffentlichungstag der Patentschrift: 05.08.81

(51) Int. Cl.³: **C 01 B 21/14, C 22 C 38/50**

(21) Anmeldenummer: **78100973.3**

(22) Anmeldetag: **22.09.78**

(54) Verfahren zur Herstellung von Hydroxylammoniumsalzen.

(30) Priorität: **27.09.77 DE 2743324**

(43) Veröffentlichungstag der Anmeldung:
**13.06.79 Patentblatt 79/12**

(45) Bekanntmachung des Hinweises auf die Patenterteilung:
**05.08.81 Patentblatt 81/31**

(84) Benannte Vertragsstaaten:
**BE CH DE FR GB NL**

(56) Entgegenhaltungen:
**CH - A - 195 118
DE - A - 2 100 036
DE - C - 968 363
US - A - 2 865 741
US - A - 3 837 846
WERKSTOFFE UND KORROSION,
1964 Heft 1
I. CLASS UND H. GRÄFEN:
"Beitrag zur Frage der Beständigkeit
von austenitischen Chrom-Nickel-Stählen und Mo- und Cu-Gehalten bei
Einwirkung von Schwefelsäure"
Seiten 79 bis 84**

(73) Patentinhaber: **BASF Aktiengesellschaft
Carl-Bosch-Strasse 38
D-6700 Ludwigshafen (DE)**

(72) Erfinder: **Rapp, Guenther, Dr.
Mundenheimer Strasse 174
D-6700 Ludwigshafen (DE)**
Erfinder: **Thomas, Erwin
Borngasse 12
D-6713 Freinsheim (DE)**
Erfinder: **Muenster, Rolf
Herrmann-Ehlers-Strasse 2
D-6720 Speyer (DE)**
Erfinder: **Caffall, Brodus E.
124 Catalpa
Lake Jackson Texas 77566 (US)**
Erfinder: **Cyr, Philipp A.
114 Buttercup
Lake Jackson Texas 77566 (US)**
Erfinder: **Jones, Thomas M.
602 Centerway
Lake Jackson Texas 77566 (US)**

## Verfahren zur Herstellung von Hydroxylammoniumsalzen

Gegenstand der Erfindung ist ein Verfahren zur Herstellung von Hydroxylammoniumsalzen durch katalytische Reduktion von Stickstoffmonoxid mit Wasserstoff in verdünnten wäßrigen Mineralsäuren in Gegenwart von suspendierten Platinkatalysatoren bei erhöhter Temperatur, wobei man die Umsetzung in Reaktionsgefäßen aus bestimmten Werkstoffen durchführt.

Bei der Herstellung von Hydroxylammoniumsalzen durch katalytische Reduktion von Stickstoffmonoxid mit Wasserstoff in verdünnten wäßrigen Mineralsäuren in Gegenwart von suspendierten Platinkatalysatoren bei erhöhter Temperatur besteht das Problem, daß das saure reduzierende Reaktionsgemisch außerordentlich korrosiv ist. Es steht nur eine beschränkte Auswahl von Werkstoffen zur Verfügung, die eine ausreichende Korrosionsbeständigkeit haben. Geeignet haben sich erwiesen Kunststoffe wie Polyvinylchlorid, Polyäthylen, Polypropylen, Polytetrafluoräthylen sowie Kunst- und Naturkautschuke. Ferner sind für solche korrosiven Medien mit Email oder Graphit sowie mit Platin oder Tantal ausgekleidete Vorrichtungen geeignet. Die Nachteile dieser Werkstoffe bei Verwendung am Reaktorbau sind teils hoher Preis, schwierige Verarbeitbarkeit, teils störende Eigenschaften wie Zerbrechlichkeit, Altersversprödung, Stoß- und Schlagempfindlichkeit, geringe mechanische Festigkeit. Diese Eigenschaften erschweren den Bau von Reaktoren zur Hydroxylammoniumsalz-Herstellung vor allem dann, wenn die Synthese unter Druck ausgeführt werden soll.

Auch eine Reihe von handelsüblichen Stahllegierungen hoher mechanischer Festigkeit und guter Korrosionsbeständigkeit haben sich bei der Synthese von Hydroxylamin durch katalytische Reduktion von Stickstoffmonoxid in wäßrigen Mineralsäuren nicht bewährt. Chrom-Nickel-Stähle mit Titanzusatz (Werkstoff 1.4541) werden unter dem Einfluß des reduzierenden stark sauren wäßrigen Reaktionsmediums korrodiert. Andere Chrom-Nickel-Stähle mit Molybdänzusatz, die zusätzlich Kupfer enthalten und die unter normalen Anwendungsbedingungen besonders stabil gegen verdünnte Schwefelsäure sind wie der Werkstoff 1.4505, zeigen ebenfalls Korrosionserscheinungen.

Durch Korrosion wird die Lebensdauer der Stähle gemindert. Doch besonders nachteilig ist die ungünstige Beeinflussung des Reaktionsverlaufs durch in Lösung gehende Grundstoffe der Metallegierungen.

Es was deshalb die technische Aufgabe gestellt, bei der Herstellung von Hydroxylammoniumsalzen durch Reduktion von Stickstoffmonoxid mit Wasserstoff in saurem Medium die Umsetzung in Reaktionsgefäßen durchzuführen, die praktisch nicht korrodieren, stoß- und schlagunempfindlich sind, alterungsbeständig und gut bearbeitbar sind und hohe mechanische Festigkeit besitzen, um die Reaktion auch unter erhöhtem Druck durchführen zu können.

Diese Aufgabe wird gelöst in einem Verfahren zur Herstellung von Hydroxylammoniumsalzen durch katalytische Reduktion von Stickstoffmonoxid mit Wasserstoff in verdünnten wäßrigen Mineralsäuren in Gegenwart von suspendierten Platinkatalysatoren bei erhöhter Temperatur, dadurch gekennzeichnet, daß man die Umsetzung in Reaktionsgefäßen durchführt, deren Wandungen aus an sich bekannten kupferhaltigen, austenischen Chrom-Nickel-Stählen bestehen, die einen Gehalt von 16 bis 28 Gew.% Chrom, 32 bis 50 Gew.% Nickel, 1 bis 4 Gew.% Molybdän, bis zu 4 Gew.% Kupfer und höchstens 0,1 Gew.% Kohlenstoff haben und zusätzlich mindestens die 5-fache Menge an Titan, bezogen auf die Kohlenstoffmenge, jedoch nicht mehr als 1 Gew.%, oder Niob oder Tantal in mindestens der 8-fachen Menge, bezogen auf den Kohlenstoffgehalt, jedoch nicht mehr als 1 Gew.% enthalten.

Die erfindungsgemäße Arbeitsweise hat den Vorteil, daß die verwendeten Werkstoffe gegenüber dem Reaktionsmedium eine hervorragende Korrosionsbeständigkeit besitzen und keine den Reaktionsablauf schädigenden Stoffe an das Reaktionsmedium abgeben. Darüber hinaus sind die verwendeten Werkstoffe alterungs-, schlag- und stoßunempfindlich und besitzen eine hervorragende mechanische Festigkeit. Sie lassen sich gut verarbeiten und haben eine lange Lebensdauer.

In der Regel geht man von Wasserstoff/Stickstoffmonoxid-Gemischen aus, in denen das Molverhältnis von Wasserstoff : Stickstoffmonoxid > 1 ist. Vorzugsweise hält man ein Molverhältnis von 1,5 : 1 bis 6 : 1 ein. Besonders gute Ergebnisse erhält man, wenn man darauf achtet, daß in der Reaktionszone ein Molverhältnis von Wasserstoff : Stickstoffmonoxid von 3,5 bis 5 : 1 aufrechterhalten wird.

Im allgemeinen verwendet man als Mineralsäuren nicht reduzierende starke Mineralsäuren wie Perchlorsäure, Salpetersäure, Schwefelsäure oder Phosphorsäure. Geeignet sind auch deren saure Salze, wie Ammoniumbisulfat. Besonders bevorzugt wird Schwefelsäure verwendet. In der Regel geht man von 4 bis 6 normalen wäßrigen Säuren aus und läßt im Verlauf der Reaktion die Säurekonzentration nicht unter 0,2 normal fallen.

Die Umsetzung führt man vorteilhaft bei Temperaturen von 30 bis 80°C durch. Besonders bewährt haben sich Temperaturen von 40 bis 60°C. In der Regel führt man die Umsetzung bei Atmosphärendruck oder erhöhtem Druck, z.B. bis zu 300 bar durch.

Als Platinkatalysatoren werden im allgemeinen Trägerkatalysatoren verwendet. Besonders bewährt hat sich Platin auf Kohleträger, insbesondere auf Graphit. Die Katalysatoren werden in feinverteilter Form als Suspension angewendet. Vorzugsweise hat ein solcher Katalysator einen Gehalt von 0,2 bis 5 Gew.% Platin. Vorteilhaft enthalten die Katalysatoren zusätzlich ein oder mehrere Elemente der 5. und/oder 6. Gruppe des Periodischen Systems mit einem Atomgewicht > 31, ferner Blei und/oder Quecksilber als vergiftende Mittel. Geeignete Katalysatoren und deren Herstellung werden beispielsweise beschrieben in der DE—AS 10 88 037, DE—PS 920 963, 956 038, 945 752.

Die Umsetzung wird in Reaktionsgefäßen durchgeführt, deren Wandungen aus an sich bekannten kupferhaltigen, austenitischen Stählen bestehen, die einen Gehalt von 16 bis 28 Gew.% Chrom, 32 bis 50 Gew.% Nickel, 1 bis 4 Gew.% Molybdän, bis zu 4 Gew.% Kupfer und höchstens 0,1 Gew.% Kohlenstoff haben. Es versteht sich, daß der Rest aus Eisen besteht. Unter kupferhaltig ist erfindungsgemäß zu verstehen, daß den Legierungen Kupfer als Legierungsmetall zugegeben wird. Darüber hinaus enthalten die verwendeten Stähle zusätzlich Titan in mindestens der 5-fachen Menge des Kohlenstoffgehalts, jedoch nicht mehr als 1 Gew.%, oder Niob oder Tantal in mindestens der 8-fachen Menge des Kohlenstoffgeheltes, jedoch nicht mehr als 1,5 Gew.%. Besonders bevorzugt eignet sich ein Stahl mit einem Gehalt an Nichteisenbestandteilen von 18 bis 25 Gew.% Chrom, 34 bis 45 Gew.% Nickel, 1,5 bis 3.5 Gew.% Molybdän, 1,5 bis 3,5 Gew.% Kupfer, 0,01 bis 0,07 Gew.% Kohlenstoff, 0,8 bis 1,0 Gew.% Titan oder 0,6 bis 0,9 Gew.% Niob. Die Stähle können daneben Verunreinigungen in geringen Mengen enthalten, die bei der Stahlherstellung aus Schrott zwangsläufig eingeschleppt werden.

Der verwendete Ausdruck Reaktionsgefäße ist im weitesten Umfang zu verstehen. Er beinhaltet nicht nur Wandungen des eigentlichen Reaktionsgefäßes, sondern auch die dazugehörigen Leitungen, Pumpen, Kühler und Rüher, D.h. es sollen sämtliche Wandungen, die mit dem Reaktionsgemisch in Berührung kommen, aus dem erfindungsgemäßen Werkstoff bestehen. Die erfindungsgemäßen Stahllegierungen besitzen alle Vorteile legierter, austenitischer Stähle für den Bau von Vorrichtungen, z.B. Gieß- und Verformbarkeit, gute Bearbeitbarkeit, Verschweißbarkeit, jeweils mit den üblichen Techniken. Die hohe mechanische Festigkeit ermöglicht ihren Einsatz als Werkstoff für Hochdruckreaktoren. Der entscheidende Vorteil liegt neben der Preiswürdigkeit in ihrer hohen Korrosionsbeständigkeit gegenüber dem reduzierenden stark sauren wäßrigen Reaktionsmedium. Es ist überraschend, daß die Hydroxylaminsynthese dann störungsfrei verläuft, nachdem die Gefäßwandungen etwa 200 Stunden dem Angriff des Reaktionsmediums unter Reaktionsbedingungen ausgesetzt wurden. Die so erreichte Passivierung kann bislang durch andere bekannte Passivierungsmittel nicht erreicht werden.

Nach dem Verfahren der Erfindung hergestellte Hydroxylammoniumsalze eignen sich zur Herstellung von Cyclohexanonoxim, einen Vorprodukt für die Herstellung von Caprolactam. Das Verfahren nach der Erfindung sei an folgenden Beispielen veranschaulicht.

Vergleichsbeispiele 1 und 2 und Beispiel 1 bis 3

Vier hintereinandergeschaltete Reaktionsgefäße werden mit je 6 000 l 4,5 n Schwefelsäure und 150 kg eines 1 Gew.% enthaltenden Platin-Graphit-Katalysators gefüllt. Bei geschlossenen Verbindungsleitungen wird der Inhalt der Reaktionsgefäße mit einem Wasserstoff/Stickstoffmonoxid-Gemisch im Molverhältnis 1,7 : 1 beaufschlagt, daß sich eine Konzentration an freier Schwefelsäure in den einzelnen Reaktionsgefäßen wie folgt einstellt.

Reaktor 1   3,2 n

Reaktor 2   2,0 n

Reaktor 3   0,95 n

Reaktor 4   0,3 n

Bei nunmehr geöffneten Verbindungsleitungen zwischen den einzelnen Reaktionsgefäßen wird 20 Gew.%ige Schwefelsäure zusammen mit Platinkatalysator in den Reaktor 1 eingeführt und durch die Reaktoren zu einer Trennvorrichtung geleitet. Der von der gebildeten Hydroxylammoniumsulfatlösung abgetrennte Katalysator wird in das Reaktionsgefäß 1 zurückgeleitet. Gleichzeitig wird ein Gemisch aus Wasserstoff und Stickstoffmonoxid der genannten Zusammensetzung parallel durch die Reaktoren 4, 3 und 2 geleitet. Die Abgase aus diesen Reaktoren werden gesammelt und gemeinsam durch den Reaktor 1 geführt. Stündlich erhält man so 380 kg Hydroxylamin als Hydroxylammoniumsulfatlösung bei einer Hydroxylaminausbeute von 93,5%, bezogen auf umgesetztes Stickstoffmonoxid.

In das erste Reaktionsgefäß werden Probestücke verschiedener Edelstahlsorten eingebracht und diese 8 Monate dem Reaktionsmedium ausgesetzt. Nach Entnahme der Werkstoffe wird ihr jährlicher Oberflächenabtrag aus Einwirkungsdauer und Gewichtsverlust unter Berücksichtigung der exponierten Oberfläche und Dichte ermittelt. Die Ergebnisse sind aus folgender Tabelle ersichtlich.

| Werkstoff | Werkstoff Nr. | C | Cr | Ni | Mo | Cu | Ti | Nb | jährl. Abtrag (mm) |
|---|---|---|---|---|---|---|---|---|---|
| Vergleichsbeispiel 1 | 1.4541 | 0,07 | 18 | 10,5 | — | — | 0,45 | — | fast aufgelöst |
| Beispiel 1 | | 0,05 | 19,6 | 34,6 | 2,5 | 3,3 | — | 0,8 | 0,10 |
| Beispiel 2 | | 0,03 | 20,4 | 37,4 | 2,0 | 3,3 | — | 0,7 | 0,08 |
| Beispiel 3 | | 0,05 | 21 | 42 | 3,0 | 2,0 | 0,9 | — | 0,07 |
| Vergleichsbeispiel 2 | 1.4505 | 0,05 | 18 | 20 | 2,25 | 2,0 | — | 0,63 | 0,47 |

Beispiel 4

Man verfährt wie im Beispiel 1 beschrieben, ersetzt in den Vorrichtungen des ersten Reaktors jedoch 6,5% der exponierten Werkstofffläche durch einen Stahl mit einem Gehalt von 37,4 Gew.% Nickel, 20,4 Gew.% Chrom, 2,0 Gew.% Molybdän, 3,3 Gew.% Kupfer, 0,7 Gew.% Niob und 0,03 Gew.% Kohlenstoff. Nach 4 Jahren Dauerbetrieb ist kein Abtrag erkennbar. Die Hydroxylaminsynthese verläuft ohne Beeinträchtigung.

**Patentanspruch**

Verfahren zur Herstellung von Hydroxylammoniumsalzen durch katalytische Reduktion von Stickstoffmonoxid mit Wasserstoff in verdünnten wäßrigen Mineralsäuren in Gegenwart von suspendierten Platinkatalysatoren bei erhöhter Temperatur, dadurch gekennzeichnet, daß man die Umsetzung in Reaktionsgefäßen durchführt, deren Wandungen aus an sich bekannten kupferhaltigen austenitischen Chrom-Nickel-Stählen bestehen, die einen Gehalt von 16 bis 28 Gew.% Chrom, 32 bis 50 Gew.% Nickel, 1 bis 4 Gew.% Molybdän, bis zu 4 Gew.% Kupfer, höchstens 0,1 Gew.% Kohlenstoff haben und zusätzlich mindestens die 5-fache Menge an Titan, bezogen auf die Kohlenstoffmenge, jedoch nicht mehr als 1 Gew.%, oder Niob oder Tantal in mindestens der 8-fachen Menge, bezogen auf den Kohlenstoffgehalt, jedoch nicht mehr als 1,5 G=w.% Niob oder Tantal, enthalten, wobei der Rest, abgesehen von eventuellen Verunreinigungen, aus Eisen besteht.

**Revendication**

Procéde de préparation de sels d'hydroxylammonium par réduction catalytique de bioxyde d'azote (NO) avec de l'hydrogène dans des acides minéraux aqueux dilués, en présence de catalyseurs de platine en suspension, à température élevée, caractérisé par le fait que l'on effectue la réaction dans des récipients de réaction dont les parois sont en aciers chrome-nickel austénitiques cupriques, connus en soi, qui ont une teneur de 16 à 28% en poids de chrome, 32 à 50% de nickel, 1 à 4% de molybdène, jusqu'à 4% en poids de cuivre, au maximum 0,1% en poids de carbone, et qui contiennent en outre au moins le quintuple en titane rapporté à la quantité de carbone, mais toutefois pas plus que 1% en poids, ou bien au moins l'octuple en niobium ou tantale rapporté à la teneur en carbone, mais toutefois pas plus que 1,5% en poids de niobium ou de tantale, le reste étant constitué de fer, compte non tenu d'éventuelles impuretés.

**Claim**

A process for the manufacture of hydroxylammonium salts by catalytic reduction of nitric oxide with hydrogen in a dilute aqueous mineral acid in the presence of a suspended platinum catalyst at an elevated temperature, characterized in that the reaction is carried out in vessels of which the walls consist of conventional copper-containing austenitic chromium-nickel steels which contain from 16 to 28% by weight of chromium, from 32 to 50% by weight of nickel, from 1 to 4% by weight of molybdenum, up to 4% by weight of copper and at most 0.1% by weight of carbon and which in addition contain an amount of titanium which is at least 5 times the amount of carbon but is not more than 1% by weight, or an amount of niobium or tantalum which is at least 8 times the amount of carbon but is not more than 1.5% by weight, the balance, apart from any impurities present, consisting of iron.